# EUROPÄISCHE PATENTSCHRIFT

(11) **EP 2 877 332 B1**
(45) Veröffentlichungstag und Bekanntmachung des Hinweises auf die Patenterteilung: **11.01.2017**
(21) Anmeldenummer: 13739697.4
(22) Anmeldetag: 19.07.2013
(51) Int. Cl.: B29C 45/14, B29C 45/16, B60K 37/06

(54) **VERFAHREN ZUR HERSTELLUNG EINES KUNSTSTOFFBAUTEILS**
METHODS OF MANUFACTURING A PLASTIC PART
PROCÉDÉS DE FABRICATION D'UNE PIÈCE EN MATIERE PLASTIQUE

(30) Priorität: 24.07.2012 DE 102012014659
(43) Veröffentlichungstag der Anmeldung: 03.06.2015
(73) Patentinhaber: Leopold Kostal GmbH & Co. KG, 58513 Lüdenscheid (DE)
(72) Erfinder: ESDERS, Berthold, 58579 Schalksmühle (DE); WOROBEY, Volker, 58507 Lüdenscheid (DE)
(74) Vertreter: Kerkmann, Detlef
(86) Internationale Anmeldenummer: PCT/EP2013/065328
(87) Internationale Veröffentlichungsnummer: WO 2014/016222

(56) Entgegenhaltungen:
- WO-A1-2010/130300
- DE-A1-102006 054 264
- JP-A- H0 584 770
- JP-A- S6 072 712

## Beschreibung

Die Erfindung betrifft ein Kunststoffbauteil, insbesondere für ein Kraftfahrzeug, sowie Verfahren zur Herstellung eines solchen Kunststoffbauteils.

Zur Herstellung hochwertiger, glatter und glänzender Designoberflächen, beispielsweise als Bedienflächen von Geräten in einem Kraftfahrzeug, ist es bekannt, die Oberfläche mit einem Polyurethan zu beschichten und zwar insbesondere durch einen Überflutungsprozess. Mit Polyurethan überflutet werden beispielsweise Echtmaterialien wie Holz oder Carbon, Kunststoffbauteile oder auch hinterspritzte Folien aus Kunststoff.

Bei hinterspritzten Folien werden unter anderem siebbedruckte Varianten eingesetzt, die abschnittsweise mit einer Symbolik versehen sind. Außerhalb der Symbolflächen sind diese Folien zumeist einfarbig ausgeführt. Solche Folien sind je nach Anzahl der zur Herstellung erforderlichen Druckstufen und je nach Größe der bedruckten Fläche kostenintensiv.

Aus der DE102006054264A1, welche den Oberbegriff der Ansprüche 1 und 2 offenbart, ist ein Verfahren bekannt, bei dem ein Folienstück hinterspritzt und mit Polyurethan überflutet wird. Das Halten eines Folienstückes an einer Kavitätswandl mittels eines federbelasteten Stiftes ist aus der JPH584770A bekannt.

Es stellte sich die Aufgabe, alternative Verfahren zur Herstellung eines solchen Kunststoffbauteils mit einem oder mehreren Folienstücken zu realisieren, welche eine besonders kostengünstige Herstellung ermöglichen.

Diese Aufgabe wird durch die Verfahrensansprüche 1 und 2 gelöst.

Ein so hergestelltes Kunststoffbauteil weist ein oder mehrere Folienstücke auf, die mit einem Kunststoffkörper verbunden und gemeinsam mit diesem mit einem Material aus der Stoffgruppe der Polyurethane (in der folgenden Beschreibung und in den Ansprüchen kurz als Polyurethan bezeichnet) überflutet sind. Die durch Verwendung von Folien erzielbaren Eigenschaften werden häufig nur örtlich begrenzt an einer oder mehreren Stellen der Bauteiloberfläche benötigt Anstatt vollständige Folien zu hinterspritzen, werden lediglich eines oder mehrere Folienstücke an hierzu vorgesehenen Stellen eines Kunststoffkörpers angeordnet. Dadurch können aus kostenaufwendigen Folien die Folienstücke für zumeist mehrere Bauteile vorgefertigt werden, wodurch in vielen Fällen eine erhebliche Kosteneinsparung erreichbar ist.

Die beiden erfindungsgemäßen Verfahren beschreiben jeweils eine vorteilhafte Möglichkeit zur Herstellung des Kunststoffbauteils und zeigen insbesondere auf, wie die Folienstücke auf vorteilhafte Weise positionsgenau an einem Kunststoffkörper platziert werden können. Die jeweils als letzter Verfahrensschritt vorgesehene Polyurethanüberflutung schafft eine einheitlich glatte und glänzende Oberfläche des Kunststoffbauteils. Zudem erzeugt eine Polyurethanüberflutung eine nur geringe mechanische Spannung, so dass auch größere Bereiche wie Symbolfelder oder Beleuchtungsbereiche nicht zu nachträglichen Verformungen neigen.

Im ersten Verfahren wird mindestens ein Folienstück (im Folgenden ohne Beschränkung der Allgemeinheit auch einfach als Folienstücke bezeichnet) in ein Spritzgießwerkzeug eingelegt und danach partiell oder in den Randzonen angespritzt oder hinterspritzt. Nach diesem Prozess erfolgt ein Überfluten des gesamten Kunststoffkörpers mit Polyurethan.

Die Folienstücke werden bei geöffnetem Spritzgießwerkzeug auf den Auswerferstempeln des Spritzgießwerkzeugs fixiert. Danach fährt das Spritzgießwerkzeug zusammen und presst die Folienstücke an die Wand der Kavität des Spritzgießwerkzeugs an.

Alternativ, jedoch nicht als Teil der Erfindung, können die Folienstücke auch durch mechanische Anschläge oder durch Vakuumbohrungen innerhalb der Kavität des Spritzgießwerkzeugs fixiert und danach mittels der Auswerferstempel gehalten werden.

Das zweite Verfahren sieht für eine alternative Lösung der gestellten Aufgabe vor, einen Kunststoffkörper in einem ersten Schritt so zu spritzen, dass freizustellende Bereiche im Kunststoffkörper frei bleiben. Dies kann durch ein Umspritzen von Endabschnitten der Auswerferstempel des Spritzgießwerkzeugs erfolgen. Nach dem Öffnen des Spritzgießwerkzeugs werden Folienstücke, die eine etwas größere Fläche aufweisen als die freigestellten Bereiche, auf die freigestellten Bereiche aufgeklebt. Vorzugsweise weisen die Folienstücke im Bereich der Freistellungen keinen Kleber auf, so dass die Folienstücke nicht an den Auswerferstempeln anhaften. Der so vorbereite Kunststoffkörper wird anschließend in eine zweite Spritzgießform eingesetzt und mit Polyurethan überflutet.

Die geringe Scherwirkung des dünnfließenden Polyurethans ermöglicht ein Überfluten, ohne dass die aufgeklebten Folienstücke abgelöst werden. Die Polyurethanschicht überflutet alle Teile und kompensiert mögliche Stufen oder Bindenähte. Danach sieht das Kunststoffbauteil einstückig aus.

Vorteilhaft dabei ist es, wenn die Folienstücke und der Kunststoffkörper gleichfarbig ausgeführt sind, es sei denn, dass explizit ein Mehrfarbeneffekt erwünscht ist.

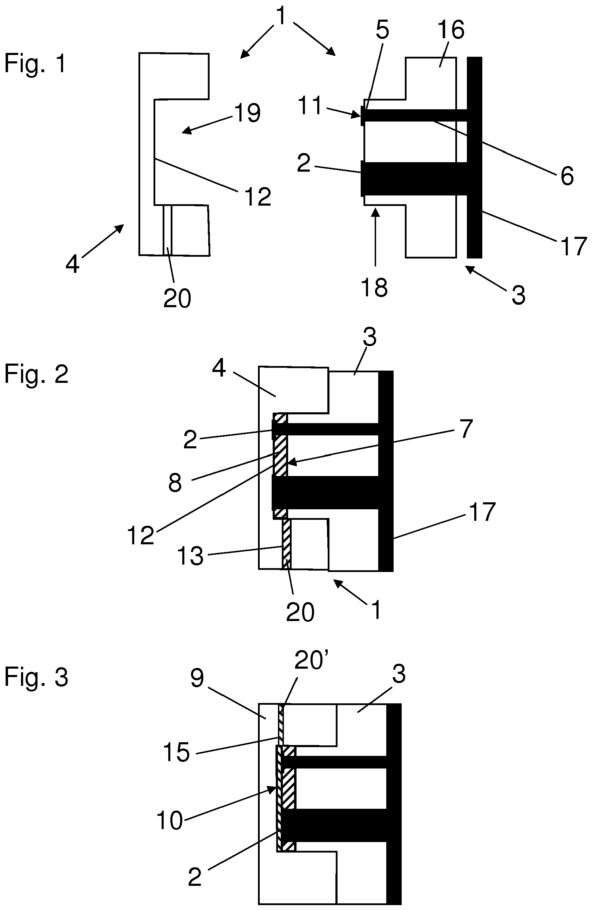

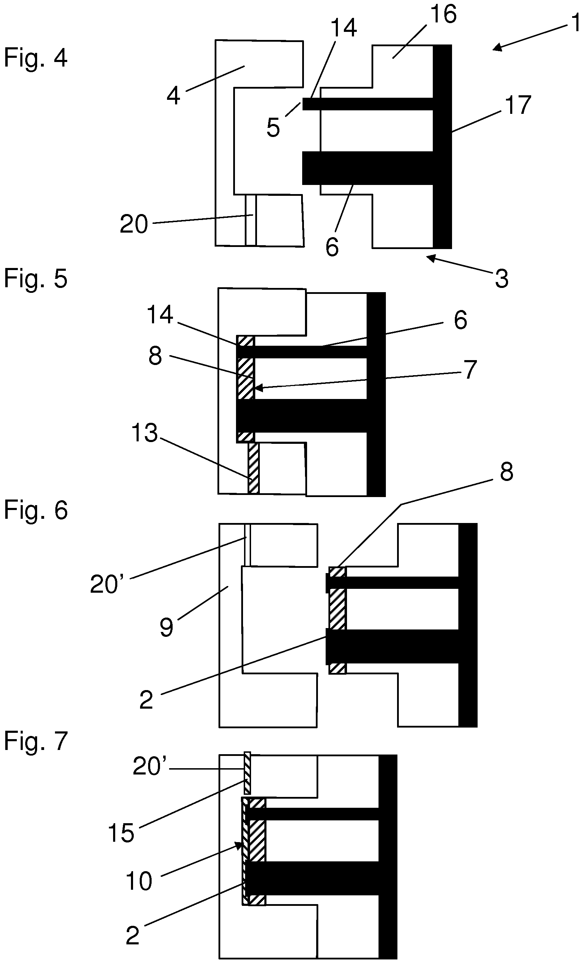

Im Folgenden soll die Herstellung eines erfindungsgemäßen Kunststoffbauteils anhand der Zeichnung näher erläutert werden. Hierzu skizzieren die Figuren 1 bis 3 den Ablauf eines ersten Verfahrens und die Figuren 4 bis 7 den Ablauf eines zweiten Verfahrens zur Herstellung des Kunststoffbauteils. In allen Figuren sind gleiche oder gleichartige Gegenstände mit jeweils den gleichen Bezugszeichen bezeichnet.

In den Figuren skizzenhaft dargestellt sind verschiedene Herstellungsphasen eines Kunststoffbauteils mittels eines Spritzgießwerkzeugs 1. Das Spritzgießwerkzeug 1 besteht aus einer Positivform 3, die einen erhabenen Abschnitt 18 aufweist, der in den Aufnahmebereich 19 einer ersten oder zweiten Negativform 4, 9 eingefahren werden kann. Sind die Positivform 3 und die Negativform 4 bzw. 9 zusammengeführt, wie beispielsweise in der Figur 2 ersichtlich, so verbleibt im Inneren des Spritzgießwerkzeugs 1 ein Hohlraum, der als erste bzw. zweite Kavität 7, 10 bezeichnet ist. Über jeweils einen Düsenkanal 20, 20' in der Negativform 4, 9 kann in die jeweilige Kavität 7, 10 ein geschmolzener Kunststoff 13, 15 eingespritzt werden.

In einem Grundkörper 16 der Positivform 3 sind, hier beispielhaft zwei, Auswerferstempel 6 geführt, die als Teile einer Auswerfervorrichtung 17 gegenüber dem Grundkörper 16 mechanisch verfahrbar sind. Im ausgefahrenen Zustand, besonders deutlich in der Figur 4 dargestellt, ragen die Auswerferstempel 6 über die Stirnfläche des Grundkörpers 16 der Positivform 3 heraus; im eingefahrenen Zustand, besonders gut erkennbar in der Figur 1, schließen die Stirnflächen der Auswerferstempel 6 bündig mit der Stirnfläche des Grundkörpers 16 ab.

Das in den Figuren 1 bis 3 skizzierte erste Verfahren sieht vor, im geöffneten Zustand (Figur 1) des Spritzgießwerkzeugs 1 Folienstücke 2 auf die Stirnflächen 5 der Auswerferstempel 6 aufzusetzen und zu fixieren. Hierzu können Vakuuminstallationen in den Auswerferstempeln 6 vorhanden oder formschlüssige Verbindungsmittel installiert sein, die jedoch in den Figuren nicht dargestellt und hier nicht näher beschrieben sind.

Nach der Fixierung der Folienstücke 2 fährt die Positivform 3 in die Negativform 4 des Spritzgießwerkzeugs 1 ein (Figur 2) und presst die freien Oberflächen 11 der Folienstücke 2 gegen die innere Wand 12 der ersten Kavität 7. Danach wird ein geschmolzenes Kunststoffmaterial 13 über den Düsenkanal 20 in die erste Kavität 7 eingespritzt. Die Folienstücke 2 sind anschließend fest mit dem eingespritzten Kunststoffmaterial 13 zu einem Kunststoffkörper 8 verbunden.

Im nächsten Verfahrensschritt (Figur 3) wird die Positivform 3 mitsamt dem Kunststoffkörper 8 in eine zweite Negativform 9 eingefügt, wodurch zwischen der Positivform 3 und der zweiten Negativform 9 eine zweite Kavität 10 gebildet wird. In diese zweite Kavität 10 wird über einen Düsenkanal 20' nun Polyurethan 15 mit im Vergleich zum ersten Spritzvorgang geringerem Druck eingespritzt. Da das Polyurethan 15 im Vergleich zu dem Kunststoffmaterial 13 sehr dünnflüssig ist, werden alle Übergänge zwischen den Folienstücken 2 und dem Kunststoffkörper 8 ausgefüllt.

Bei dem in den Figuren 4 bis 7 dargestellten zweiten Verfahren in einem ersten Schritt im Spritzgießwerkzeug 1 ein Kunststoffkörper 8 erzeugt. Dazu werden Endabschnitte 14 der Auswerferstempel 6 umspritzt (Figur 5). Nach dem Öffnen des Spritzgießwerkzeugs 1, ersichtlich in der Figur 6, werden Folienstücke 2, die vorzugsweise selbstklebende Abschnitte aufweisen, auf den Kunststoffkörper 8 im Bereich oberhalb der Stirnflächen der Auswerferstempel 6 aufgeklebt. Vorzugsweise können dazu die Folienstücke 2, die vorderseitig und/oder rückseitig mit einem Symboldruck versehen sind, an Randabschnitten mit einem Kleber versehen sein, während die Bereich, die an dem Auswerferstempel 6 anliegen, nicht klebend ausgeführt sind.

Nach dem Aufkleben der Folienstücke 2 fährt die Positivform des Spritzgießwerkzeugs 1 in eine zweite Negativform 9 und Polyurethan 15 wird, wie im ersten Verfahren, zur Überflutung des Kunststoffkörpers 8 mit den aufgeklebten Folienstücken 2 über einen Düsenkanal 20' eingelassen.

### Bezugszeichen

- 1: Spritzgießwerkzeug
- 2: Folienstück(e)
- 3: Positivform
- 4: erste Negativform
- 5: Stirnflächen
- 6: Auswerferstempel
- 7: erste Kavität
- 8: Kunststoffkörper
- 9: zweite Negativform
- 10: zweite Kavität
- 11: freie Oberflächen (der Folienstücke)
- 12: innere Wand (Kavitätswand)
- 13: Kunststoffmaterial
- 14: Endabschnitte (der Auswerferstempel)
- 15: Polyurethan
- 16: Grundkörper
- 17: Auswerfervorrichtung
- 18: erhabener Abschnitt
- 19: Aufnahmebereich
- 20,20': Düsenkanal

## Patentansprüche

1. Verfahren zur Herstellung eines Kunststoffbauteils, insbesondere für ein Kraftfahrzeug mittels eines Spritzgießwerkzeugs (1),
wobei an dem Kunststoffbauteil mindestens ein Folienstück (2) an einem Teilstück einer Oberflächenseite eines gespritzten Kunststoffkörpers (8) angeordnet ist und das mindestens eine Folienstück (2) und die Oberfläche mit einer Polyurethanüberflutung versehen sind,
**gekennzeichnet durch** die Abfolge folgender Verfahrensschritte
- Bereitstellung des zu verarbeitenden mindestens einen Folienstücks (2),
- Fixieren des mindestens einen Folienstücks (2) an den Stirnflächen (5) von Auswerferstempeln (6), die in einer Positivform (3) des Spritzgießwerkzeugs (1) geführt sind,
- Zusammenführen der Positivform (3) mit der ersten Negativform (4) des Spritzgießwerkzeugs (1) zur Ausbildung einer ersten Kavität (7),
- Andrücken der freien Oberflächen des mindestens einen Folienstücks (2) gegen die Kavitätswand (12) der Negativform (4),**durch** Einfahren der Auswerferstempel (6) in die erste Negativform (4),
- Umspritzen des mindestens einen Folienstücks (2) mit einem Kunststoffmaterial (13) zur Herstellung eines Kunststoffkörpers (8),
- Trennen der Positivform (3) von der ersten Negativform (4),
- Zusammenführen der Positivform (3) mit dem Kunststoffkörper (8) mit einer zweiten Negativform (9), welche eine zweite Kavität (10) ausbildet,
- Einspritzen eines Polyurethans (15) in die zweite Kavität (10) zur Überflutung der Oberfläche des Kunststoffkörper (8) und des mindestens einen Folienstücks (2).

2. Verfahren zur Herstellung eines Kunststoffbauteils, insbesondere für ein Kraftfahrzeug mittels eines Spritzgießwerkzeugs (1),
wobei an dem Kunststoffbauteil mindestens ein Folienstück (2) an einem Teilstück einer Oberflächenseite eines gespritzten Kunststoffkörpers (8) angeordnet ist und das mindestens eine Folienstück (2) und die Oberflächenseite mit einer Polyurethanüberflutung versehen sind,
**gekennzeichnet durch** die Abfolge folgender Verfahrensschritte:
- Bereitstellung des zu verarbeitenden mindestens einen Folienstücks (2),
- Zusammenführen der Positivform (3) mit einer ersten Negativform (4) des Spritzgießwerkzeugs (1) zur Ausbildung einer ersten Kavität (7),
- Andrücken der Stirnflächen (5) der Auswerferstempel (6), die in der Positivform (3) geführt sind, gegen die Kavitätswand (12) der Negativform (4), **durch** Einfahren des Auswerferstempels (6) in die erste Negativform (4),
- Umspritzen der Auswerferstempel (6) mit einem Kunststoffmaterial (13) zur Herstellung eines Kunststoffkörpers (8),
- Trennen der Positivform (3) von der ersten Negativform (4),
- Fixieren des mindestens einen Folienstücks (2) an dem Kunststoffkörper (8) im Bereich der Stirnfläche (5) mindestens eines Auswerferstempels (6),
- Zusammenführen der Positivform (3) mit dem Kunststoffkörper (8) und dem mindestens einen Folienstücks (2) mit einer zweiten Negativform (9), welche eine zweite Kavität (10) ausbildet,
- Einspritzen eines Polyurethans (15) in die zweite Kavität (10) zur Überflutung der Oberflächenseite des Kunststoffkörper (8) und des mindestens einen Folienstücks (2).

3. Verfahren nach Anspruch 1 oder 2, **dadurch gekennzeichnet, dass** das mindestens eine Folienstück (2) ein Teilstück einer Lack- oder Dekorfolie ist.

4. Verfahren nach Anspruch 1 oder 2, **dadurch gekennzeichnet, dass** das mindestens eine Folienstück (2) eine Symbolbedruckung aufweist.

## Claims

1. Process for manufacturing a plastic component, in particular for a motor vehicle, by means of an injection moulding tool (1),
whereby at least one piece of foil (2) is located on the plastic component on a section of one side of the surface of an injection-moulded plastic body (8) and the at least one piece of foil (2) and the surface are provided with a polyurethane over-moulding,
**characterised by** the sequence of the following process steps:
- Provision of the at least one piece of foil (2) to be processed,
- Fixing the at least one piece of foil (2) to the front faces (5) of ejector stamps (6) which are guided in a positive mould (3) of the injection moulding tool (1),
- Joining the positive mould (3) to the first negative mould (4) of the injection moulding tool (1) for the purpose of forming a first cavity (7),
- Pressing the free surfaces of the at least one piece of foil (2) against the cavity wall (12) of the negative mould (4) by retracting the ejector stamp (6) into the first negative mould (4),
- Over-moulding the at least one piece of foil (2) with a plastic material (13) for the purpose of fabricating a plastic body (8),
- Separating the positive mould (3) from the first negative mould (4),
- Joining the positive mould (3) with the plastic body (8) to a second negative mould (9) which forms a second cavity (10),
- Injecting polyurethane (15) into the second cavity (10) for the purpose of over-moulding the surface of the plastic body (8) and the at least one piece of foil (2).

2. Process for manufacturing a plastic component, in particular for a motor vehicle, by means of an injection moulding tool (1),
whereby at least one piece of foil (2) is located on the plastic component on a section of one side of the surface of an injection-moulded plastic body (8) and the at least one piece of foil (2) and the side of the surface are provided with a polyurethane over-moulding,
**characterised by** the sequence of the following process steps:
- Provision of the at least one piece of foil (2) to be processed,
- Joining the positive mould (3) to a first negative mould (4) of the injection moulding tool (1) for the purpose of forming a first cavity (7),
- Pressing the front faces (5) of the ejector stamps (6), which are guided in the positive mould (3), against the cavity wall (12) of the negative mould (4) by retracting the ejector stamp (6) into the first negative mould (4),
- Over-moulding the ejector stamps (6) with a plastic material (13) for the purpose of fabricating a plastic body (8),
- Separating the positive mould (3) from the first negative mould (4),
- Fixing the at least one piece of foil (2) to the plastic body (8) in the vicinity of the front face (5) of at least one ejector stamp (6),
- Joining the positive mould (3) to the plastic body (8) and the at least one piece of foil (2) to a second negative mould (9), forming a second cavity (10),
- Injecting polyurethane (15) into the second cavity (10) for the purpose of over-moulding the side of the surface of the plastic body (8) and the at least one piece of foil (2).

3. Process according to Claim 1 or Claim 2, **characterised in that** the at least one piece of foil (2) is a piece of a lacquer foil or decorative foil.

4. Process according to Claim 1 or Claim 2, **characterised in that** the at least one piece of foil (2) features a symbol imprint.

## Revendications

1. Procédé de fabrication d'un composant en matière plastique, en particulier pour un véhicule automobile, au moyen d'un outil de moulage par injection (1),
sachant que le composant en matière plastique présente au moins un morceau de feuille (2), qui est disposé sur une partie d'un côté de la surface d'un corps en matière plastique (8) injecté, et que le morceau de feuille (2) au moins prévu et la surface sont revêtus de polyuréthane, **caractérisé par** la succession des étapes de procédé suivantes
- mise à disposition du morceau de feuille (2) à traiter, au moins prévu,
- fixation du morceau de feuille (2) au moins prévu sur les faces frontales (5) d'éjecteurs (6), qui sont introduits dans un moule positif (3) de l'outil de moulage par injection (1),
- assemblage du moule positif (3) et du premier moule négatif (4) de l'outil de moulage par injection (1) pour la formation d'une première cavité (7),
- pression des surfaces libres du morceau de feuille (2) au moins prévu contre la paroi (12) de la cavité du moule négatif (4), en introduisant l'éjecteur (6) dans le premier moule négatif (4),
- revêtement par injection du morceau de feuille (2) au moins prévu avec une matière plastique (13) pour la fabrication d'un corps en matière plastique (8),
- séparation du moule positif (3) et du premier moule négatif (4),
- assemblage du moule positif (3) et du corps en matière plastique (8) avec un deuxième moule négatif (9), qui forme une deuxième cavité (10),
- injection d'un polyuréthane (15) dans la deuxième cavité (10) pour revêtir la surface du corps en matière plastique (8) et le morceau de feuille (2) au moins prévu.

2. Procédé de fabrication d'un composant en matière plastique, en particulier pour un véhicule automobile, au moyen d'un outil de moulage par injection (1),
sachant que le composant en matière plastique présente au moins un morceau de feuille (2), qui est disposé sur une partie d'un côté de surface d'un corps en matière plastique (8) injecté, et que le morceau de feuille (2) au moins prévu et la surface sont pourvus d'un revêtement de polyuréthane,
**caractérisé par** la succession des étapes de procédé suivantes :
- mise à disposition du morceau de feuille (2) à traiter, au moins prévu,
- assemblage du moule positif (3) et d'un premier moule négatif (4) de l'outil de moulage par injection (1) pour la formation d'une première cavité (7),
- pression des faces frontales (5) des éjecteurs (6), qui sont introduits dans le moule positif (3), contre la paroi (12) de la cavité du moule négatif (4), par introduction de l'éjecteur (6) dans le premier moule négatif (4),
- revêtement par injection des éjecteurs (6) avec une matière plastique (13) pour la fabrication d'un corps en matière plastique (8),
- séparation du moule positif (3) et du premier moule négatif (4),
- fixation du morceau de feuille (2) au moins prévu au corps en matière plastique (8), dans la région de la face frontale (5) d'au moins un éjecteur (6),
- assemblage du moule positif (3), du corps en matière plastique (8) et du morceau de feuille (2) au moins prévu, avec un deuxième moule négatif (9), qui forme une deuxième cavité (10),
- injection d'un polyuréthane (15) dans la deuxième cavité (10) pour revêtir la surface du corps en matière plastique (8) et le morceau de feuille (2) au moins prévu.

3. Procédé selon revendication 1 ou 2, **caractérisé en ce que** le morceau de feuille (2) au moins prévu est une partie d'une feuille de laque ou d'une feuille décorative.

4. Procédé selon revendication 1 ou 2, **caractérisé en ce que** le morceau de feuille (2) au moins prévu présente une impression de symboles.
